# EUROPEAN PATENT APPLICATION

(11) **EP 4 509 877 A1**
(43) Date of publication of application: **19.02.2025**
(21) Application number: 24194340.6
(22) Date of filing: 13.08.2024
(51) Int. Cl.: G01S 17/04, A47K 5/12, B64D 11/02, G01S 17/08, G01S 17/10, G01S 17/88, E03C 1/05

(54) **TOUCHLESS LAVATORY OPTICAL TIME OF FLIGHT PROXIMITY SENSOR**

(30) Priority: 14.08.2023 US 202318449285
(71) Applicant: B/E Aerospace, Inc., Winston-Salem, NC 27105 (US)
(72) Inventor: SRIKANTEGOWDA, Avinash Hasirumane, Mukilteo, 98275 (US)
(74) Representative: Dehns

(57) **Abstract**

A time-of-flight controlled touchless device (400) is disclosed. The time-of-flight controlled touchless device (400) includes a time-of-flight sensor (215, 216) and a microcontroller (402) in operable communication with the time-of-flight sensor (215, 216). The microcontroller (402) is configured to command the time-of-flight sensor (215, 216) to emit a photon in a predefined direction, command the time-of-flight sensor (215, 216) to receive the photon reflected off a surface, determine a target object's (308) distance based on a time-of-flight between emitting the photon and receiving the photon, compare the target object's (308) distance to a predefined range, and, responsive to the target object's distance being within the predefined range, command an actuator on a dispensing valve (408) to activate to dispense a liquid (410).

## Description

### FIELD

The present disclosure relates generally to improved sensor systems and methods and, more particularly, to improved sensor systems and methods for an aircraft lavatory.

### BACKGROUND

Typically, a lavatory of an aircraft includes many surfaces that require activation, such as a faucet, a soap dispenser, a waste flap, a toilet flush, a toilet seat, and a toilet, among others. Typical lavatory systems have manually activated switches for activation of these surfaces. In recent years, infrared technology has been used to activate devices such as a touchless faucet or a touchless soap dispenser, among others. However, a conventional infrared touchless soap dispenser and a touchless water faucet, placed in close proximity within an aircraft lavatory sink, are typically susceptible to false activation and low performance due to the color, size, and reflectance dependency of the target object.

### SUMMARY

A time-of-flight controlled touchless device is disclosed herein. The time-of-flight controlled touchless device includes a time-of-flight sensor and a microcontroller in operable communication with the time-of-flight sensor. The microcontroller is configured to: command the time-of-flight sensor to emit a photon in a predefined direction, wherein the time-of-flight sensor includes an infrared laser that emits the photon; command the time-of-flight sensor to receive the photon reflected off a surface; determine a target object's distance based on a time-of-flight between emitting the photon and receiving the photon; compare the target object's distance to a predefined range; and, responsive to the target object's distance being within the predefined range, command an actuator on the dispensing valve to activate to dispense a liquid.

In various embodiments, the microcontroller is further configured to: responsive to the target object's distance being outside the predefined range, command the actuator on the dispensing valve to deactivate to prevent the liquid from dispensing. In various embodiments, the time-of-flight controlled touchless device further includes the dispensing valve. In various embodiments, the actuator on the dispensing valve is configured to: activate responsive to receiving an activation command from the microcontroller; and deactivate responsive to receiving a deactivation command from the microcontroller. In various embodiments, the dispensing valve dispenses at least one of water or soap.

In various embodiments, the time-of-flight sensor includes an infrared emitter configured to emit the photon in the predefined direction responsive to receiving a command from the microcontroller. In various embodiments, the time-of-flight sensor comprises an infrared receiver configured to receive the photon reflected off the surface responsive to receiving a command from the microcontroller. In various embodiments, the time-of-flight controlled touchless device further includes a manual override configured to manually activate the actuator on the dispensing valve to dispense the liquid. In various embodiments, the microcontroller is configured to receive electrical power and distribute the electrical power to the time-of-flight sensor and the dispensing valve.

Also disclosed herein is an aircraft lavatory. The aircraft lavatory includes a time-of-flight controlled touchless device. The time-of-flight controlled touchless device includes a time-of-flight sensor and a microcontroller in operable communication with the time-of-flight sensor. The microcontroller is configured to: command the time-of-flight sensor to emit a photon in a predefined direction, wherein the time-of-flight sensor includes an infrared laser that emits the photon; command the time-of-flight sensor to receive the photon reflected off a surface; determine a target object's distance based on a time-of-flight between emitting the photon and receiving the photon; compare the target object's distance to a predefined range; and, responsive to the target object's distance being within the predefined range, command an actuator on a dispensing valve to activate to dispense a liquid.

In various embodiments, the microcontroller is further configured to: responsive to the target object's distance being outside the predefined range, command the actuator on the dispensing valve to deactivate to prevent the liquid from dispensing. In various embodiments, the time-of-flight controlled touchless device further includes the dispensing valve. In various embodiments, the actuator on the dispensing valve is configured to: activate responsive to receiving an activation command from the microcontroller; and deactivate responsive to receiving a deactivation command from the microcontroller. In various embodiments, the dispensing valve dispenses at least one of water or soap.

In various embodiments, the time-of-flight sensor includes an infrared emitter configured to emit the photon in the predefined direction responsive to receiving a command from the microcontroller. In various embodiments, the time-of-flight sensor includes an infrared receiver configured to receive the photon reflected off the surface responsive to receiving a command from the microcontroller. In various embodiments, the time-of-flight controlled touchless device further includes a manual override configured to manually activate the actuator on the dispensing valve to dispense the liquid. In various embodiments, the microcontroller is configured to receive electrical power and distribute the electrical power to the time-of-flight sensor and the dispensing valve.

Also disclosed herein is a method of operating a time-of-flight controlled touchless device. The method includes commanding, by a microcontroller, a time-of-flight sensor to emit a photon in a predefined direction, wherein the time-of-flight sensor includes an infrared laser that emits the photon; commanding, by the microcontroller, the time-of-flight sensor to receive the photon reflected off a surface; determining, by the microcontroller, a target object's distance based on a time-of-flight between emitting the photon and receiving the photon; comparing, by the microcontroller, the target object's distance to a predefined range; and, responsive to the target object's distance being within the predefined range, commanding, by the microcontroller, an actuator on a dispensing valve to activate to dispense a liquid.

In various embodiments, the method further includes, responsive to the target object's distance being outside the predefined range, commanding, by the microcontroller, the actuator on the dispensing valve to deactivate to prevent the liquid from dispensing. In various embodiments, the time-of-flight sensor includes an infrared emitter to emit the photon in the predefined direction and an infrared receiver to receive the photon reflected off the surface. In various embodiments, the predefined direction is an area where the liquid will be dispensed.

The forgoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1 illustrates a front view of an aircraft, in accordance with various embodiments.
FIG. 2 illustrates a perspective view of a lavatory disposed within a fuselage of an aircraft, in accordance with various embodiments.
FIGS. 3A and 3B illustrate a perspective view and a side view, respectively, of a sink within a lavatory disposed within a fuselage of an aircraft, in accordance with various embodiments.
FIG. 4 illustrates a schematic view of touchless device configures with a time-of-flight sensor, in accordance with various embodiments; and
FIG. 5 illustrates a flow chart for operating a time-of-flight controlled touchless device, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an," or "the" may include one or more than one and that reference to an item in the singular may also include the item in the plural. Further, all ranges may include upper and lower values and all ranges and ratio limits disclosed herein may be combined.

As stated previously, a lavatory of an aircraft includes many surfaces that require activation, such as a faucet, a soap dispenser, a waste flap, a toilet flush, a toilet seat, and a toilet, among others. Infrared technology has been used to activate devices such as a touchless faucet or a touchless soap dispenser, among others. However, a conventional infrared touchless soap dispenser and a touchless water faucet, placed in close proximity within an aircraft lavatory sink, are typically susceptible to false activation and low performance due to the color, size, and reflectance dependency of the target object.

Disclosed herein is a touchless device for a lavatory of an aircraft that utilizes a time-of-flight (ToF) to detect the target object's distance and activate the touchless device in response to the target object being within an area of defined activation range. In various embodiments, an infrared emitter, i.e. an infrared laser, within the touchless device and under command of a microcontroller within the touchless device, is configured to emit a photon. In various embodiments, an infrared receiver within the touchless device and under command of the microcontroller, is configured to receive the photon after the photon has reflected off a surface, i.e. a sink or a target object, among others. In various embodiments, based on a time between the infrared emitter emitting the photon and the infrared receiver receiving the photon, the microcontroller determines a time-of-flight to detect the target object's distance from the infrared emitter and the infrared receiver. In various embodiments, if the target object's distance is within a predefined range, then the microcontroller is configured to send a command to an actuator on a dispensing valve. In various embodiments, in response to receiving the command, the actuator on the dispensing valve is configured to activate to allow a liquid, such as water or soap, among others, or to actuate a flushometer or the like to be dispensed.

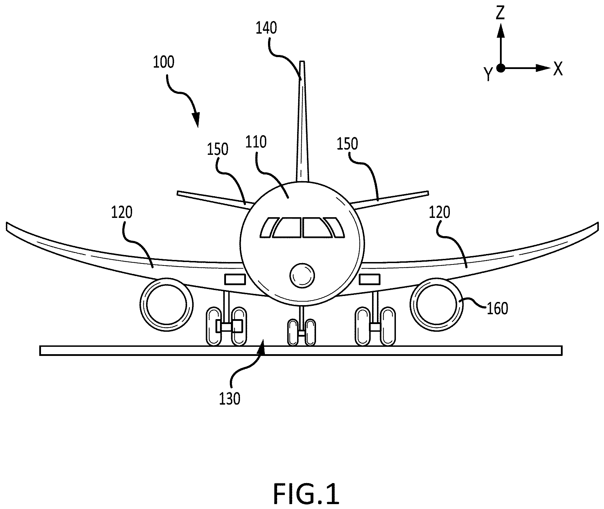

Referring now to FIG. 1, a front view of an aircraft 100 is illustrated. in accordance with various embodiments. The aircraft 100 comprises a fuselage 110, wings 120 extending outward from the fuselage 110, a landing gear system 130, a vertical stabilizer 140, horizontal stabilizers 150, and engines 160. In various embodiments, fuselage 110 defines an aircraft cabin therein. In this regard, in various embodiments, passengers may board the aircraft 100 and sit within the aircraft cabin during travel. In various embodiments, the aircraft cabin includes at least one lavatory disposed therein, as described further herein. In various embodiments, aircraft lavatories may have limited space within the aircraft cabin in order to maximize passenger space and/or limit drag of the aircraft 100 during flight. In this regard, in various embodiments, a time-of-flight enable touchless device within the lavatory of the aircraft 100 provides for the touchless device to operate reliably with an optimal range of interest for object detection. In various embodiments, a time-of-flight ranging may be independent of color, size, and reflectance of the target object, which may aid in activation of the touchless device only when intended.

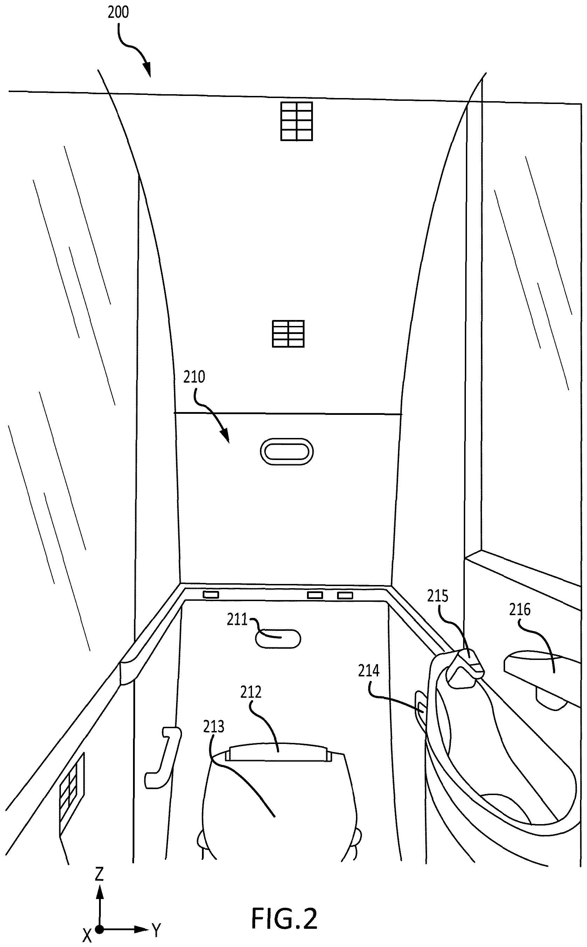

Referring now to FIG. 2, a perspective view of a lavatory 200 disposed within a fuselage 110 of the aircraft 100 from FIG. 1 is illustrated, in accordance with various embodiments. In various embodiments, the lavatory 200 includes a plurality of sensors 210 (e.g., a sensors 211, 212, 213, 214, 215, 216). In various embodiments, each sensor in the plurality of sensors 210 may be disposed proximate a device which the respective sensor is configured to activate. For example, sensor 211 is disposed proximate a toilet and configured to activate a flush system associated with the toilet. In various embodiments, in a confined space, such as a lavatory 200 of an aircraft, various sensors of the plurality of sensors 210 may be susceptible to false activation and low performance due to the color, size, and reflectance dependency of the target object leading to sub-optimal use of limited resources on board the aircraft 100 from FIG. 1. In that regard, in various embodiments, various sensors of the plurality of sensors 210, such as sensors 211, 212, 213, and 214, may include near sensing technology, such as infrared sensors, electric field sensors, etc. In further regard, in various embodiments, other ones of the plurality of sensors 210, such as sensors 215 and 216, may include time-of-flight sensing technology.

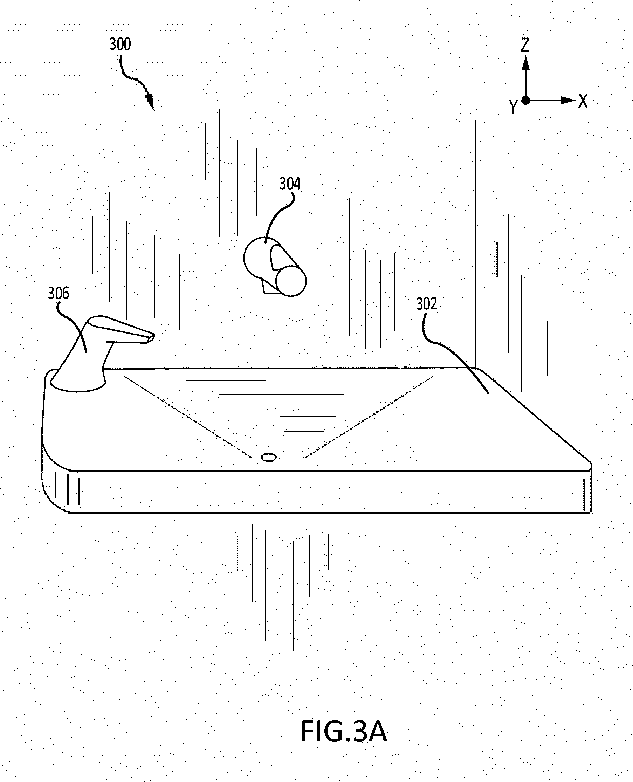

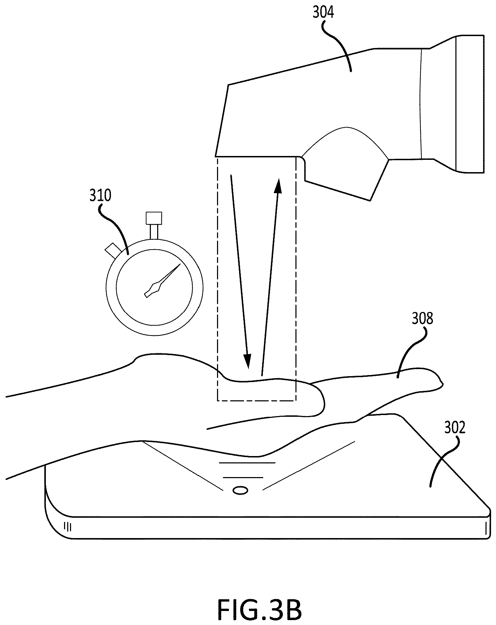

Referring now to FIGS. 3A and 3B, a perspective view and a side view, respectively, of a sink 302 within a lavatory, such as lavatory 200 of FIG. 2, disposed within a fuselage 110 of the aircraft 100 from FIG. 1 are illustrated, in accordance with various embodiments. In various embodiments, the sink 302 has an associated touchless water faucet 304 and an associated touchless soap dispenser 306. In various embodiments, a target object, such as a passenger's hands, may be placed beneath the touchless soap dispenser 306 to have soap dispensed onto the target object or beneath the touchless water faucet 304 to have water dispensed onto the target object.

With particular reference to FIG. 3B, a microcontroller, within the touchless water faucet 304, sends a command to an infrared emitter, i.e. an infrared laser, to have a photons emitted in a predefined direction, i.e. toward an area where the water will be dispensed and thus, where the target object will be detected. In that regard, in various embodiments, the infrared emitter is configured to emit the photon. In various embodiments, an infrared receiver within the touchless device and under command of the microcontroller, is configured to receive the reflected photon after the photon has reflected off a surface, i.e. a sink or a target object, among others. In various embodiments, based on a time between the infrared emitter emitting the photon and the infrared receiver receiving the photon, the microcontroller determines a time-of-flight 310 to detect the target object's distance from the infrared emitter and the infrared receiver. In that regard, responsive to the target object 308 being placed beneath the touchless water faucet 304 to have water dispensed onto the target object 308 and responsive to the microcontroller determining that the target object's 308 distance is within a predefined range, then the microcontroller is configured to send a command to an actuator on a dispensing valve, within the touchless water faucet 304. In various embodiments, the predefined range may be between 3 cm (1.181 inches) and 15 cm (5.906 inches). In various embodiments, the predefined range may be between 6 cm (2.362 inches) and 12 cm (4.724 inches). In various embodiments, the predefined range may be between 8 cm (3.15 inches) and 10 cm (3.937 inches). In various embodiments, in response to receiving the command, the actuator on the dispensing valve is configured to activate to allow a liquid to be dispensed.

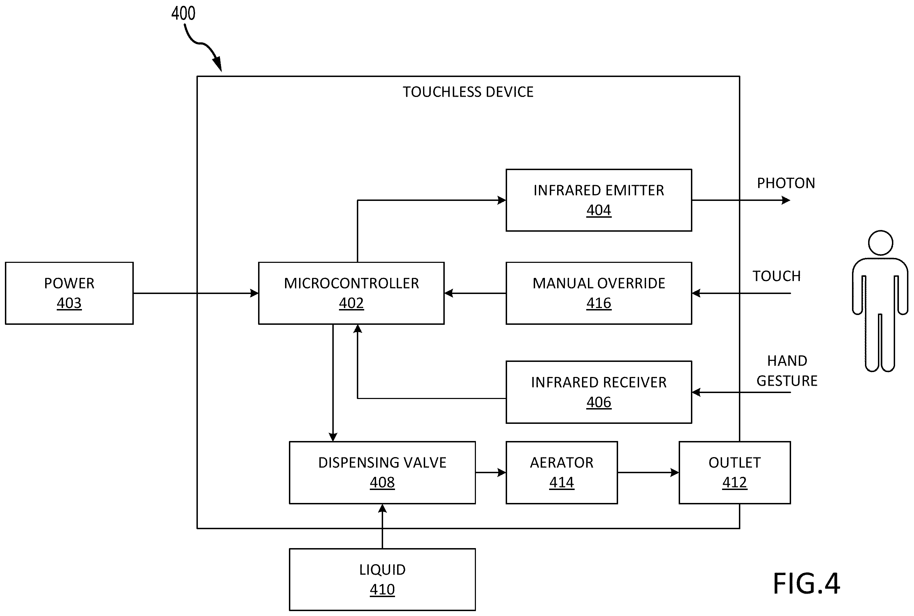

Referring now to FIG. 4, a schematic view of touchless device configures with a time-of-flight sensor is illustrated, in accordance with various embodiments. In various embodiments, the touchless device 400 includes a microcontroller 402, an infrared emitter 404, i.e. an infrared laser, an infrared receiver 406, and a dispensing valve 408. In various embodiments, the infrared emitter 404, the infrared receiver 406, and the dispensing valve 408 are electrically and communicatively coupled to the microcontroller 402. In that regards, the microcontroller 402 may receive electrical power 403 from the aircraft and distribute the electrical power to the infrared emitter 404, the infrared receiver 406, and the dispensing valve 408. In various embodiments, the infrared emitter 404 and the infrared receiver 406 may be configured in a single time-of-flight sensor.

In various embodiments, the microcontroller 402 includes one or more logic devices and a memory. In various embodiments, the one or more logic devices may be one or more of a central processing unit (CPU), an accelerated processing unit (APU), a digital signal processor (DSP), a field programmable gate array (FPGA), an application specific integrated circuit (ASIC), or the like (e.g., the microcontroller 402 may utilize one or more processors of any appropriate type/configuration, may utilize any appropriate processing architecture, or both). In various embodiments, the memory may include any non-transitory memory known in the art. The memory may store instructions usable by the logic device to perform operations. Any appropriate computer-readable type/configuration may be utilized as the memory, any appropriate data storage architecture may be utilized by the memory, or both.

The memory may be integral to the microcontroller 402 or may be located remote from the microcontroller 402. The one or more logic devices may communicate with the memory via any wired or wireless protocol. In that regard, the one or more logic devices may access data stored in the memory. In various embodiments, the microcontroller 402 may be integrated into computer systems onboard the aircraft 100 from FIG. 1. Furthermore, any number of conventional techniques for electronics configuration, signal processing and/or control, data processing and the like may be employed. Also, the processes, functions, and instructions may include software routines in conjunction with processors, etc.

System program instructions and/or controller instructions may be loaded onto a non-transitory, tangible computer-readable medium having instructions stored thereon that, in response to execution by the processor, cause the microcontroller 402 to perform various operations. The term "non-transitory" is to be understood to remove only propagating transitory signals per se from the claim scope and does not relinquish rights to all standard computer-readable media that are not only propagating transitory signals per se.

In various embodiments, the microcontroller 402 sends a command to the infrared emitter 404 to have a photon emitted in a predefined direction, i.e. toward an area where the liquid will be dispensed and thus, where the target object will be detected. In that regard, responsive to receiving the command, the infrared emitter 404 is configured to emit a photon toward an area where the liquid will be dispensed. In various embodiments, the infrared receiver 406 is configured to receive the photon after the photon has reflected off a surface, i.e. a sink or a target object, among others, and send a signal to the microcontroller 402. In various embodiments, the microcontroller 402 is configured to determine a target object's distance from the infrared emitter 404 and the infrared receiver 406 based on a time-of-flight between the infrared emitter 404 emitting the photon and the infrared receiver 406 receiving the photon. In various embodiments, if the target object's distance is within a predefined range, then the microcontroller 402 is configured send an activation command to an actuator on the dispensing valve 408. In various embodiments, in response to receiving the activation command, the actuator on the dispensing valve 408 is configured to activate to allow a liquid 410, such as water or soap, among others, to be dispensed via a conduit 412. In that regard, the liquid 410 may be fluidly coupled to the dispensing valve 408 and the conduit 412 may be fluidly coupled to the dispensing valve 408. In various embodiments, an aerator 414 may be disposed between the dispensing valve 408 and the conduit 412. In various embodiments, if the target object's distance is outside the predefined range, then the microcontroller 402 continues to operate to identify a next target object's distance.

In various embodiments, responsive to the actuator on the dispensing valve 408 being activated, the microcontroller 402 continues to command the infrared emitter 404 and the infrared receiver to send and receive photons, respectively, and thus, the microcontroller 402 continuously or substantially continuously determines a target object's distance from the infrared emitter 404 and the infrared receiver 406 based on a time-of-flight between the infrared emitter 404 emitting the photon and the infrared receiver 406 receiving the photon. In various embodiments, if the target object's distance falls outside the predefined range, then the microcontroller 402 is configured send a deactivation command to the actuator on the dispensing valve 408. In various embodiments, in response to receiving the deactivation command, the actuator on the dispensing valve 408 is configured to deactivate to prevent the liquid 410, such as water or soap, among others, from being dispensed. In various embodiments, the touchless device 400 further includes a manual override 416. In various embodiments, the manual override 416 provide for manual activation of the actuator on the dispensing valve 408 via the microcontroller 402 in events, such as maintenance.

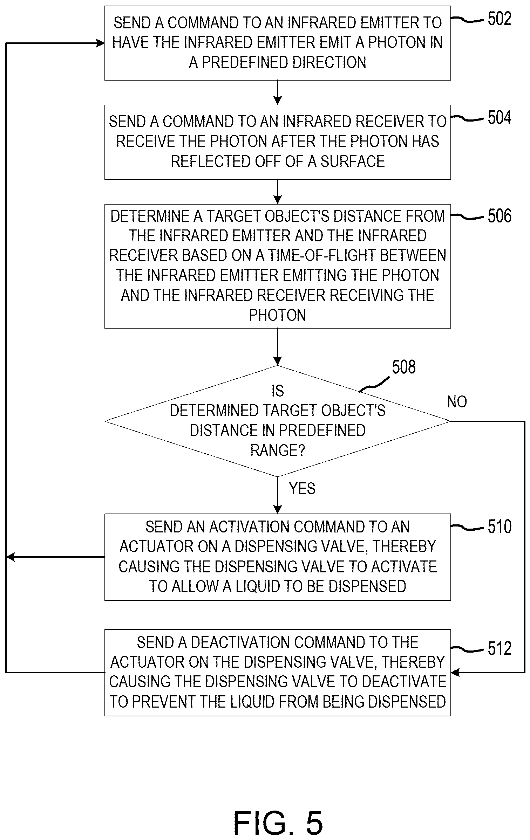

Referring now to FIG. 5, a flow chart 500 for operating a time-of-flight controlled touchless device is illustrated, in accordance with various embodiments. At block 502, the microcontroller sends a command to an infrared emitter to have the infrared emitter emit a photon in a predefined direction, i.e. toward an area where the liquid will be dispensed and thus, where the target object will be detected. In that regard, responsive to receiving the command, the infrared emitter is configured to emit a photon toward an area where the water will be dispensed. At block 504, the microcontroller sends a command to an infrared receiver to receive the photon after the photon has reflected off a surface, i.e. a sink or a target object, among others, and send a received signal to the microcontroller. At block 506, the microcontroller determines a target object's distance from the infrared emitter and the infrared receiver based on a time-of-flight between the infrared emitter emitting the photon and the infrared receiver receiving the photon. At block 508, the microcontroller compares the determined target object's distance to a predefined range. If at block 508 the determined target object's distance is within the predefined range, then at block 510, the microcontroller sends an activation command to an actuator on a dispensing valve, thereby causing the actuator on the dispensing valve to activate to allow a liquid, such as water or soap, among others, to be dispensed, with the operation returning to block 502 thereafter. If at block 508 the determined target object's distance falls outside the predefined range, then at block 512, the microcontroller sends a deactivation command to the actuator on the dispensing valve, thereby causing the actuator on the dispensing valve to deactivate to prevent the liquid from being dispensed, with the operation returning to block 502 thereafter

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, Band C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above-described concepts can be used alone or in combination with any or all of the other above-described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. A time-of-flight controlled touchless device (400), comprising:
a time-of-flight sensor (215, 216); and
a microcontroller (402) in operable communication with the time-of-flight sensor (215, 216), the microcontroller (402) configured to:
command the time-of-flight sensor (215, 216) to emit a photon in a predefined direction, wherein the time-of-flight sensor (215, 216) includes an infrared laser (404) that emits the photon;
command the time-of-flight sensor (215, 216) to receive the photon reflected off a surface;
determine a target object's (308) distance based on a time-of-flight between emitting the photon and receiving the photon;
compare the target object's (308) distance to a predefined range; and
responsive to the target object's (308) distance being within the predefined range, command an actuator on a dispensing valve (408) to activate to dispense a liquid (410).

2. The time-of-flight controlled touchless device of claim 1, wherein the microcontroller (402) is further configured to:
responsive to the target object's (308) distance being outside the predefined range, command the actuator on the dispensing valve (408) to deactivate to prevent the liquid (410) from dispensing.

3. The time-of-flight controlled touchless device of claim 1 or claim 2, further comprising:
the dispensing valve (408), wherein the actuator on the dispensing valve (408) is configured to:
activate responsive to receiving an activation command from the microcontroller (402); and
deactivate responsive to receiving a deactivation command from the microcontroller (402), and optionally:
wherein the dispensing valve (408) dispenses at least one of water or soap.

4. The time-of-flight controlled touchless device of any preceding claims, wherein the time-of-flight sensor (215, 216) comprises an infrared emitter (404) configured to emit the photon in the predefined direction responsive to receiving a command from the microcontroller, and/or;
wherein the time-of-flight sensor comprises an infrared receiver (406) configured to receive the photon reflected off the surface responsive to receiving a command from the microcontroller (402)..

5. The time-of-flight controlled touchless device of any preceding claims, further comprising:
a manual override configured to manually activate the actuator on the dispensing valve (408) to dispense the liquid (410).

6. The time-of-flight controlled touchless device of any preceding claims, wherein the microcontroller (402) is configured to receive electrical power (403) and distribute the electrical power (403) to the time-of-flight sensor and the dispensing valve (408).

7. An aircraft lavatory, comprising:
the time-of-flight controlled touchless device (400) of claim 1.

8. The aircraft lavatory of claim 7, wherein the microcontroller (402) is further configured to:
responsive to the target object's (308) distance being outside the predefined range, command the actuator on the dispensing valve (408) to deactivate to prevent the liquid (410) from dispensing.

9. The aircraft lavatory of claim 7 or claim 8, wherein the time-of-flight controlled touchless device (400) further comprises:
the dispensing valve (408), wherein the actuator on the dispensing valve (408) is configured to:
activate responsive to receiving an activation command from the microcontroller (402); and
deactivate responsive to receiving a deactivation command from the microcontroller (402), and optionally:
wherein the dispensing valve (408) dispenses at least one of water or soap.

10. The aircraft lavatory of claim 7, 8 or 9, wherein the time-of-flight sensor (215, 216) comprises an infrared emitter (404) configured to emit the photon in the predefined direction responsive to receiving a command from the microcontroller (402), and/or;
wherein the time-of-flight sensor (215, 216) comprises an infrared receiver (406) configured to receive the photon reflected off the surface responsive to receiving a command from the microcontroller (402).

11. The aircraft lavatory of any of claims 7 to 10, wherein the time-of-flight controlled touchless device (400) further comprises:
a manual override configured to manually activate the actuator on the dispensing valve (408) to dispense the liquid (410).

12. The aircraft lavatory of any of claims 7 to 11, wherein the microcontroller (402) is configured to receive electrical power (403) and distribute the electrical power (403) to the time-of-flight sensor (215, 216) and the dispensing valve (408).

13. A method of operating a time-of-flight controlled touchless device (400), the method comprising:
commanding, by a microcontroller (402), a time-of-flight sensor (215, 216) to emit a photon in a predefined direction, wherein the time-of-flight sensor includes an infrared laser (404) that emits the photon;
commanding, by the microcontroller (402), the time-of-flight sensor (215, 216) to receive the photon reflected off a surface;
determining, by the microcontroller (402), a target object's (308) distance based on a time-of-flight between emitting the photon and receiving the photon;
comparing, by the microcontroller (402), the target object's (308) distance to a predefined range; and
responsive to the target object's distance being within the predefined range, commanding, by the microcontroller (402), an actuator on a dispensing valve (408) to activate to dispense a liquid (410).

14. The method of claim 13, further comprising:
responsive to the target object's distance being outside the predefined range, commanding, by the microcontroller (402), the actuator on the dispensing valve (408) to deactivate to prevent the liquid (410) from dispensing.

15. The method of claim 13 or 14, wherein the time-of-flight sensor (215, 216) includes an infrared emitter (404) to emit the photon in the predefined direction and an infrared receiver (406) to receive the photon reflected off the surface and/or,
wherein the predefined direction is an area where the liquid (410) will be dispensed..
